Europäisches Patentamt

European Patent Office

Office européen des brevets

(11) Publication number: **0 385 011**
**A1**

# EUROPEAN PATENT APPLICATION

(21) Application number: **89302164.2**

(22) Date of filing: **03.03.89**

(51) Int. Cl.⁵: **C02F 3/08**

(43) Date of publication of application:
**05.09.90 Bulletin 90/36**

(84) Designated Contracting States:
**DE ES FR GB IT NL**

(71) Applicant: **INKA SYSTEMS (UK) LIMITED**
**7 Watt Road Hillington**
**Glasgow G52 4RY Scotland(GB)**

(72) Inventor: **Simpson, James Roxby**

**Westbank New Ridley**
**Stocksfield Northumberland NNE43 7RQ(GB)**
Inventor: **Simpson, Winifred Brownsword**
**Westbank New Ridley**
**Stocksfield Northumberland NE43 7RQ(GB)**

(74) Representative: **Fitzpatrick, Alan James et al**
**Fitzpatricks 4 West Regent Street**
**Glasgow G2 1RS Scotland(GB)**

(54) **Liquid treatment devices and methods.**

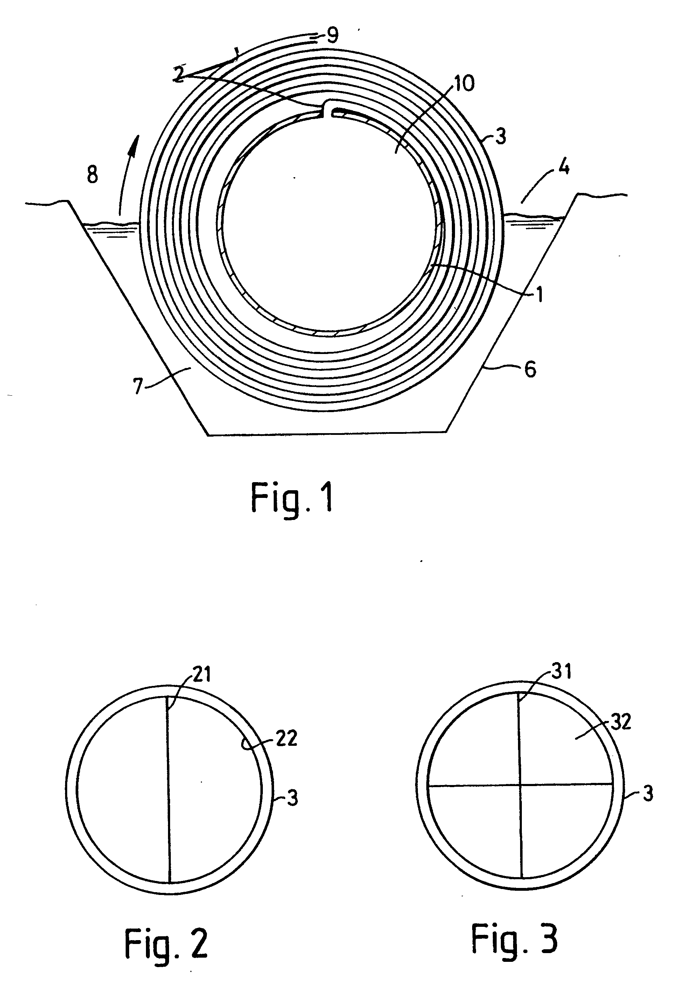

(57) The present invention relates to novel devices and methods for decontaminating contaminated liquids such as sewage. A device (1) (as shown in Figure 1) comprises a hollow container (3), having inlet (9) and outlet (2) means, wound helically around a central axis and a motive means (71) which rotates a device (1). Microorganisms and or chemicals, both of which help to decontaminate a liquid, are preferably contained in the hollow contained. When the device is partially submerged in a liquid and rotated, alternate boluses of liquid and a gas are taken into the device through the inlet means. The boluses of liquid remain separated from each other during passage through the device and emerge treated from the outlet means. Alternatively when devices of the present invention are submerged totally in a liquid then no gas is taken through the device. The treated liquid is kept separate from the untreated liquid. Methods of decontaminating liquids include methods using devices of the present invention and passing boluses of contaminated liquids and or a gas through hollow containers which contain microorganisms and or chemicals.

Fig. 1

The present invention relates to devices and methods for treating contaminated liquid and in particular to devices and methods for treating liquid sewage and waste water.

Liquid sewage and liquid waste are treated presently in a number of different ways. Typical known methods include passing the liquid sewage or waste water to be treated through beds of gravel which contain, for example, bacteria and other microorganisms, such as fungi and algae, which can be used to break down waste products in the liquid being treated. A known apparatus for treating liquid wastes and sewage comprises a rotating disc having a honeycombed outer surface. Microorganisms can grow in the honeycomb structure and they contact the liquid waste and sewage as the disc, which is partically submerged, rotates.

These known methods of treating liquid sewage and waste water are expensive to construct, and are relatively bulky. Accordingly it is an object of the present invention to overcome or mitigate some of these problems.

According to the present invention there is provided a device for treating contaminated liquid said device comprising a substantially hollow container and motive means, said container having an inlet means and an outlet means and being arranged substantially circumferentially around a central axis whereby in use the said motive means rotates the device so that when the device is at least submerged partially in a liquid to be treated liquid enters the inlet means end of the container and progresses in a defined path through the said container and out of the outlet means of the container as the device is rotated.

According to a further aspect of the present invention there is provided a method for decontaminating a contaminated liquid said method comprising passing a contaminated liquid through a hollow container which contains microorganisms and or chemicals

In a further embodiment of the present invention there is provided a further method for decontaminating contaminated liquids characterised in that said method comprises passing alternate boluses of liquid and a gas through a hollow container which contains microorganisms and or chemicals.

By bolus is meant a unit volume of liquid or a gas which forms a discrete unit.

By a gas is meant any gaseous medium.

In preferred embodiments of the present invention hollow containers used in devices and or methods of the present invention will contain microorganisms including for example any or all of bacteria, fungi and algae which help to treat and break down waste products in the liquid being treated.

Preferably the inlet and outlet means are at the ends of a hollow container however they may be placed someway along a hollow container.

Preferably the said hollow container is a cylindrical tube although it will be appreciated that other shapes of hollow containers including, for example, ones having square, rectangular,or polygonal cross sections may also be employed.

Suitably the said hollow container follows a helical path around a central axis effectively forming a continuous wall of hollow container wound around a central axis.

The said hollow container may be made from any suitable material but is made preferably from materials including, for example, polyvinylchloride (pvc) with an ultraviolet light inhibitor incorporated in it, nylon, polypropylene, rubber and metals, though preferably not copper which is toxic. Preferably the material used to make the hollow container will be impervious to the liquid being treated so that the treated liquid, on the inside, does not get contaminated with untreated liquid on the outside of the hollow container.

The hollow container will preferably be made from materials which are transparent to visible and ultra violet (UV) light if it is contemplated that algae will be contained within the hollow container.

The internal diameter of the hollow container when in the form of a tube may vary widely however preferably it will range from about 10mm to 100 mm and more preferably from 30 to 70 mm although it will be appreciated that tubes having smaller or larger internal diameters may also be used. The internal dimensions of the hollow container, when in the form of a square tube will preferably be from 10 x 10 mm to 100 x 100 mm and more preferably from 30 x 30 mm to 70 mm x 70 mm although it will be appreciated that a square tube having smaller or larger internal dimensions may also be employed. Hollow containers of rectangular cross section, typically having internal dimensions of 12 x 40 mm may also be employed.

It will be appreciated that as required devices of the present invention may employ one or more hollow containers, each having an inlet and outlet means.

The internal surface area of the hollow container, preferably may be increased in order to increase the number of microorganisms per unit length of the hollow container. This thus means that a shorter length of hollow container may be used to treat a given amount of liquid thus reducing the costs and size of a device. Means for increasing the internal surface area of the hollow container include for example inserting a second narrower hollow container inside the hollow container such that a gap exists between the outer wall of the second narrower hollow container and the inner wall of the hollow container, flat plates or webs inserted into the hollow container, roughening the surface of the internal surfaces of the hollow container and attaching or inserting fibrous materials, made for example from plastic, such as are used in pan scourers, to the internal surfaces of the hollow container. The flat plates may be inserted into the hollow container so as to form a variety of internal surfaces including for example flat plates inserted or extruded to form two, four, six or eight segments in the hollow container. Preferably the surface area increasing means such as the flat plates will run the entire length of the hollow container, however surface area increasing means which extend for only part of the length of the hollow container may also be employed.

A variety of microorganisms such as bacteria, fungi and algae or mixtures thereof may be attached to or contained, using known conventional means, within the said hollow container. Suitable microorganisms include for example anaerobic or aerobic bacteria, fungi and algae.

The hollow container of devices of the present invention is preferably wound circumferentially round a central axis of the devices.

Suitably the central axis comprises for example a hollow chamber in the form of, for example, a rod or cylinder into which, in a preferred embodiment, the outlet means of the hollow container discharges treated liquid. It will be appreciated, to a man skilled in the art that the outlet means of the hollow container can discharge treated liquid elsewhere, including, for example, into a further tube which runs outside the device, other than into a hollow chamber in the central axis of the device.

It will also be appreciated by a man skilled in the art that the untreated liquid should not be allowed to contaminate or contact the treated liquid thus it is important to ensure that treated liquid from the outlet means of a hollow container is discharged in such a manner as not to contact untreated liquid which enters the inlet means of a hollow container of a device of the the present invention. Thus for example a hollow chamber of the present invention would be so constructed, by for example having sealed ends, with an outlet for treated liquid, to ensure that untreated liquid could not contaminate treated liquid being discharged into said hollow chamber,

Suitably an outlet means of a hollow container will be attached to and open into said hollow chamber so that treated liquid will flow directly from said hollow container into said hollow chamber. It will be appreciated that a number of outlet means may be attached to and open into one or more hollow chambers of a device of the present invention.

In one embodiment a helically wound hollow container could, if made to form a continuous surface, form the cylindrical wall of a hollow chamber without the need for a separate hollow chamber.

Hollow chambers of the present invention may be made from any suitable material including those, for example, used to make hollow containers of the present invention.

Suitably the hollow container is wound around a central axis, preferably comprising a hollow chamber, to form a number of layers of hollow container thus enabling small compact devices to be constructed. The hollow container can be attached to the outer wall of the hollow chamber by any suitable known means.

A typical device of the present invention would employ a hollow container in the form of a cylindrical tube with a 35mm internal diameter and having six internal segments and of a sufficient length to allow for about ten metres of tube for each persons liquid sewage being treated. It will be appreciated that in certain circumstances more or less than 10 metres of tube per person will be required.

Calculations indicate that a length of hollow container having an internal surface area of about 3.2 sq. metres is sufficient for treating the liquid sewage from one person however it will be appreciated that hollow containers having lower or higher internal surface areas per persons liquid sewage treated may also be employed.

The devices of the present invention can be rotated by any suitable motive means including for example electric, diesel and petrol motors, water wheel, wind power. These motive means can be mounted directely on or in the devices or may drive the devices remotely. It will be appreciated, and it is important to the proper functioning of the devices, that when the devices of the present invention are being rotated and taking up alternate boluses of liquid and a gas that the separate boluses of liquid, separated by a gas, do not mix together to any appreciable degree, staying as separate boluses during their passage through a device of the present invention. This separation of discrete boluses of liquid by boluses of a gas is important to the efficient working of the devices of the present invnetion when a gas is being taken into a device. This is because it allows, for example, when a gas contains oxygen, oxygen to reach the microorganisms in a hollow container thus allowing any aerobic microorganisms there to function effectively and help treat the liquid passing through.

The speed of rotation of the devices of the present invention can be altered to suit the type of liquid being treated, for exmaple the speed of rotation can be increased, thus reducing the length of time the liquid is being treated, if the liquid being treated is relatively clean, equally the speed of rotation may be decreased if the liquid being treated is heavily contaminated. Typically speeds of rotation are of the order of 0.1 to 20 revolutions per minute and preferably about 1 to 10 revolutions per minute giving dwell times of liquids in the devices of about 10 to 40 minutes although longer or shorter dwell times may also be employed.

The speed of rotation of a device may be controlled by suitable control means. Suitable control means include for example appropriate sensors placed in the liquid to be treated. Additional sensors may also be placed in the liquid which has been treated. These sensors, including for example sensors measuring concentrations of dissolved oxygen or levels of metal ions, will preferably act to slow the speed of rotation of a device when the parameter being sensed is sub-optional and act preferably to increase the speed of rotation of a device when the parameter being measured is optimal or near optimal.

The devices of the present invention can be used to treat a wide variety of liquid wastes and liquid sewage.

If anaerobic treatment of a liquid is required then a device of the present invention may either be immersed totally in the liquid to be treated or else it may be partially immersed in a liquid in which case a non-oxygen containing gas is placed above the liquid. Known suitable containment means (to contain liquid and gas) such as sealed tanks may be used to contain a device of the present invention when used in this fashion.

In use a device of the present invention will, when immersed completely in a liquid, continually take liquid into an inlet means of the hollow container and pass treated liquid out of the hollow container though an outlet means of the hollow container.

Alternatively if a device of the present invention is only partially submerged in a liquid then alternate boluses of liquid and gas will pass through the hollow container, the liquid entering the hollow container when an inlet means is submerged in the liquid and a gas entering when an inlet means is out of the liquid.

The efficacy of the bacteria and, or, other microorganisms contained within a hollow container may be preferably increased by adding, using any known conventional means, materials such as oxygen or nutrients into the gas that enters the hollow container or the liquid as it enters the hollow container. Obviously, although this is less preferably, materials can be added which affect adversely the efficacy of the bacteria.

In a further embodiment devices of the present invention, with or without microorganisms contained in them may be used for the chemical treatment of a liquid waste or liquid sewage. In this embodiment chemicals used for treating liquids to reduce, for example, the level of a contaminant, may be introduced into the hollow container of a device. This introduction can be by any known conventional means including for example an extra tube so arranged as to introduce a chemical or mixture of chemicals near the first end of a hollow container. Suitable chemicals include for example chelating agents such as EDTA and flocculating agents such as Aluminium Sulphate, Ferrous Sulphate, Ferrous Chloride and Polyelectrolytes although it will be obvious to the man skilled in the art which chemicals may be used with devices of the present invention. It will also be obvious to a man skilled in the art that various mixtures of chemicals may be used and in addition chemicals may be used in conjunction with microorganisms or any other materials for treating liquids.

Filters to remove gross particulate contamination may be used to treat a liquid before treatment by devices of the present invention.

It will be appreciated that methods of treating liquids may be employed using devices or methods of the present invention.

A further method of treating liquids comprises passing a liquid down a hollow container which contains microorganisms and or chemicals. A further method for treating liquids comprises passing alternate boluses of a liquid and a gas, for example air, down a hollow container which contains microorganisms and or chemicals.

Chemicals to treat liquids may also be added to the liquid in or entering the hollow container in all the above methods.

Suitably devices of the present invention will be placed in suitable tanks or vessels which contain a liquid to be treated. As previously described a device may be totally submerged or only partially submerged in a liquid in a tank.

By using a device of the present invention it is possible to continually treat any liquid waste and liquid sewage without the quality of the treatment being affected by diurnal fluctuations (e.g. a high rate of liquid input during the day and a low rate of liquid input at night) in the flow of liquid to be treated by a device. This is because devices of the present invention effectively act as pumps, pumping at a constant rate a liquid through a device and thereby treating it. Thus if a liquid to be treated by a device accumulates, during one period of time faster than it can be treated, then it is merely stored in, for example, a suitable tank surrounding a device until it is treated, when the rate of accumulating liquid to be treated falls below the rate at which it is being treated by a device.

Suitably devices of the present invention may also function when liquid to be treated enters the hollow container via an inlet means when the inlet means is in or near the centre of the device for example in the hollow chamber instead of being on or near the outside of the device as shown in the accompanying figures. In this arrangement the outlet means of a hollow container would suitably be placed near or on the outside of a device.

Embodiments of the present invention will now be illustrated, by way of example only, with reference to the following figures wherein Figure 1 shows a view on one end of a device of the present invention, Figure 2 shows a cross section of a hollow container of the present invention, Figure 3 shows a cross section of a further hollow container of the present invention, Figure 4 shows a cross section of a yet further holow container of the present invention, Figure 5 shows a detail of a second end of a hollow container of the present invention, Figure 6 shows a further cross section of a hollow container of the present invention and Figure 7 shows a side view of a device of the present invention.

Referring now to Figure 1 this shows an end view of a device (1) of the present invention placed in a tank (6) of a liquid (7) to be treated. A hollow container (3), in this case a cylindrical tube of PVC of internal diameter of 35mm, is wrapped around a hollow chamber or central member (10). An inlet means (9) of the hollow container (3) is on the outside of the device. An outlet means (2) of a hollow container (3) of the device (1) enters and empties into the said hollow central member (10). In use the device (1) is rotated by motive means (not shown) in the direction of the arrow (8). As the device (1) rotates it collects liquid when the inlet means (9) is immersed in the liquid (7) and a gas (4) when out of the liquid so that alternate boluses of liquid and gas (4) progress through the hollow container (3) of the device. Treated liquid enters the hollow central member (10) and is removed from the device. The hollow central member (10) has its ends sealed apart from a pipe to allow treated liquid to flow out (not shown) to prevent untreated liquid entering it and contaminating treating liquid.

Referring now to Figure 2 this shows a cross section of a hollow container (3) of the present invention. This hollow container has a flat plate or web (21) inserted which has the effect of increasing the internal surface area of the hollow container (3). An internal surface (22) of the hollow container (3) is also shown.

Referring now to Figure 3 this shows a cross section of a further hollow container (3) of the present invention. In this embodiment there are two flat plates or webs (31) inserted into the hollow container (3) forming 4 segments (32) in the hollow container.

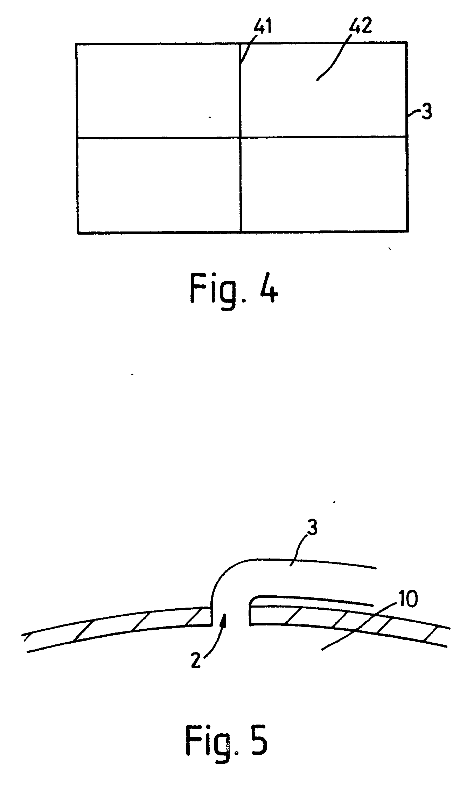

Figure 4 shows a cross section of a further hollow container (3) of a device (1) of the present invention. Flat plates or webs (41) divide the internal area of this hollow container (3) to form four segments (42).

Figure 5 shows a detailed view of an outlet means (2) of a hollow container (3) of a device (1) of the present invention emptying into a hollow central member (10).

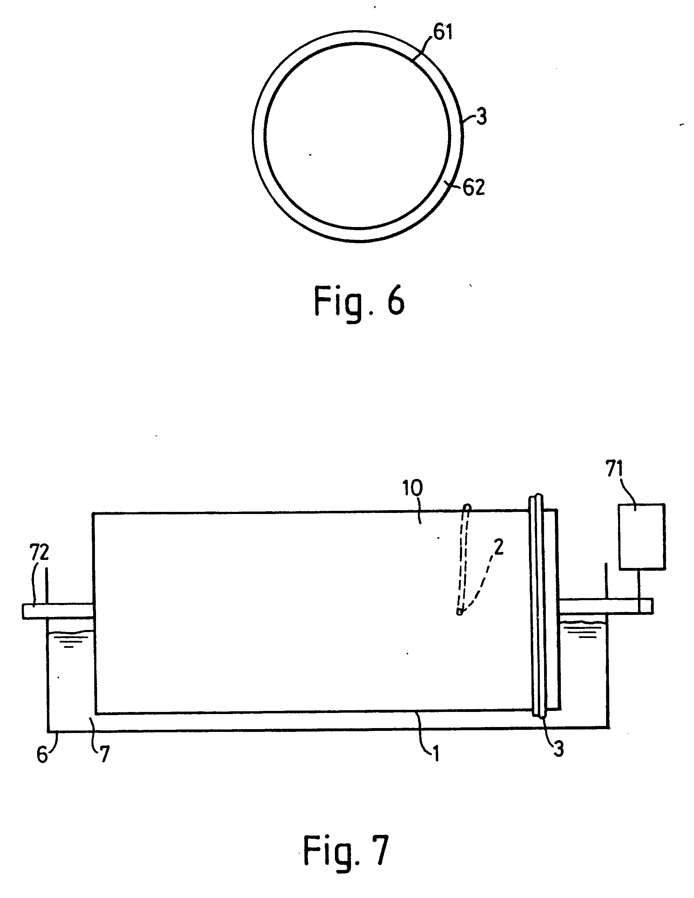

Figure 6 shows a cross section of a further hollow container (3) of a device (1) (not shown) of the present invention. A hollow tube (61) is inserted inside the said hollow container (3) leaving a gap (62), thus increasing the interanl surface area of the said hollow container.

Figure 7 shows a side view of a device (1) of the present invention sitting in a tank (6). A hollow container (3) is shown wound around a hollow central member (10). The hollow container (3) is wrapped in a large number of layers helically around the hollow central member (10). An outlet means (2) is shown entering the hollow central member (10). It will be appreciated that a number of hollow containers (3) may be wrapped around a hollow central member (10) and thus a number of outlet means (2) may empty into the hollow central member (10). Motive means (71) act to rotate the device (1). In this embodiment the device is about 3 metres in diameter and is rotated at 4 revolutions per minute. Treated liquid from the hollow central member (10) is allowed to flow out of the device through a pipe (72) and thus cannot be contaminated by the liquid (7) in the tank (6) since the ends of the hollow central chamber are otherwise sealed.

## Claims

1. A device (1) for treating contaminated liquids said device (1) comprising a substantially hollow container (3) and motive means said container (3) having an inlet means (9) and an outlet means (2) and being arranged substantially circumferentially around a central axis whereby in use the said motive means rotates the device so that when the device is at least submerged partially in a liquid to be treated liquid enters the inlet means (9) of said container (3) and progress in a defined path through the said container (3) and out of the said outlet means (2) of the container as the device (1) is rotated.

2. A device (1) as claimed in claim 1 in which separate boluses of a liquid and a gas are taken sequentially into a hollow container (3) as the said device rotates and remain as separate boluses of a liquid and gas as the liquid and a gas progress through the said container (3) and out of the outlet means (2).

3. A device (1) as claimed in any preceding claim characterised in that the said substantially hollow container (3) is arranged around a hollow central member (10) into which the said outlet means (2) of the said container (3) enters whereby in use liquid enters the said hollow central member (10) from the said outlet means (2) after treatment by passing through the said hollow container (3).

4. A device (1) as claimed in any preceding claim characterised in that the hollow container (3) is a tube.

5. A device (1) as claimed in any preceding claim characterised in that surface area increasing means (21,31,61) are contained within the said hollow container (3).

6. A device (1) as claimed in claim 5 characterised in that the surface area increasing means (21,31,61) comprises at least one flat insert bisecting and running for substantially all the length of the said hollow container (3).

7. A device (1) as claimed in claim 5 or 6 characterised in that the surface area increasing means comprises a fibrous material attached to an interanl surface (22) in the said hollow container (3).

8. A device (1) as claimed in any preceding claim characterised in that bacteria and or other microorganisms are contained within, or are attached to an inner surface (22) in the said hollow container (3).

9. A device (1) as claimed in any preceding claim characterised in that the speed of rotation of the said device (1) can be controlled by a control means which tests the liquid entering the hollow container (3).

10. A device (1) as claimed in any preceding claim characterised in that an injector means is attached to the said hollow container whereby materials may be added to the liquid passing through the said hollow container (3).

11. A device (1) is claimed in any preceding claim characterised in that the hollow container (3) is a hollow, impervious tube having an internal diameter at least 25mm.

12. A method for decontaminating a contaminated liquid comprising passing a contaminated liquid through a hollow container which contains microorganisms and or chemicals.

13. A method as claimed in claim 12 characterised in that alternate boluses of liquid and a gas are passed through a hollow container.

14. A method as claimed in claim 13 characterised in that the gas contains oxygen.

15. A method as claimed in claims 13 or 14 characterised in that the gas contains substantially no oxygen.

16. A method as claimed in claims 12,13,14,or 15 characterised in that the internal surface area of the hollow cylinder is between .32 sq.m and 32 sq.m for each person from whom liquid, in the form of sewage, is being treated.

17. A method as claimed in any of claims 12,13,14,15 or 16 characterised in that materials are added to the liquid being processed in a hollow container.

18. A method for treating liquids characterised in that the process uses a device as claimed in any of claims 1-11.

19. A method of decontaminating a contaminated liquid as claimed in any of claims 12-18 characterised in that one bolus of liquid does not mix with another bolus of liquid during treatment.

Fig. 1

Fig. 2

Fig. 3

41  42

3

Fig. 4

3

10

2

Fig. 5

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 119 783 (NATIONAL RESEARCH DEVELOPMENT CORP.) * Page 1, lines 3-110; page 2, lines 40-72; page 4, claims 1-10,14 * | 1-5,7,8 ,11-14, 18,19 | C 02 F 3/08 |
| X | DE-A-2 919 221 (H. GLAHN) * Page 5, last paragraph - page 6, paragraph 3 * | 1-4,8, 11,12, 14,18, 19 | |
| X | US-A-3 647 081 (ORENSTEIN-KOPPEL UND LUBECKER MASCHINENBAU) * Column 2, lines 33-49; column 3, line 40 - column 4, line 45 * | 1-3,5,8 ,11,12, 14,18, 19 | |
| A | | 9 | |
| A | WASSER - ABWASSER, vol. 110, no. 20, 16th May 1969, pages 538-542, Verlag von R. Oldenbourg, München, DE; U. BRETSCHER: "Die Phosphat-Elimination mit Tauchtropfkörpern" * Page 539, paragraph 3: "Versuchsanordnung" * | 10,17 | |
| A | WO-A-8 801 608 (G. CORDT) * Page 4, lines 1-21 * | 9 | **TECHNICAL FIELDS SEARCHED (Int. Cl.5)** <br><br> C 02 F |

The present search report has been drawn up for all claims

| Place of search | Date of completion of the search | Examiner |
|---|---|---|
| THE HAGUE | 26-10-1989 | TEPLY J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)